# EUROPEAN PATENT SPECIFICATION

(11) **EP 3 364 079 B1**
(45) Date of publication and mention of the grant of the patent: **02.09.2020**
(21) Application number: 16855374.1
(22) Date of filing: 11.10.2016
(51) Int. Cl.: F16J 15/18, F16J 9/14, F16J 9/28, F16J 15/44

(54) **SEAL RING**
DICHTUNGSRING
BAGUE D'ÉTANCHÉITÉ

(30) Priority: 13.10.2015 JP 2015202028; 04.02.2016 JP 2016019606
(43) Date of publication of application: 22.08.2018
(73) Proprietor: NOK Corporation, Tokyo 105-8585 (JP)
(72) Inventor: HOSONUMA Norimasa, Fujisawa-shi Kanagawa 251-0042 (JP); XU Fangman, Fujisawa-shi Kanagawa 251-0042 (JP); NAKAYAMA Kenichi, Kitaibaraki-shi Ibaraki 319-1535 (JP)
(74) Representative: TBK
(86) International application number: PCT/JP2016/080044
(87) International publication number: WO 2017/065120

(56) References cited:
- WO-A1-2010/116932
- WO-A1-2014/129505
- JP-Y1- S4 822 995
- US-A- 1 696 424

## Description

### [Technical Field]

The present invention relates to a seal ring for sealing an annular gap between a shaft and a shaft hole of a housing.

### [Background Art]

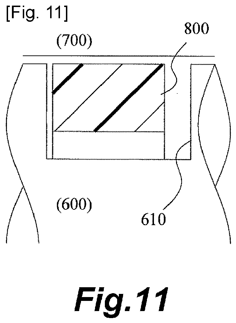

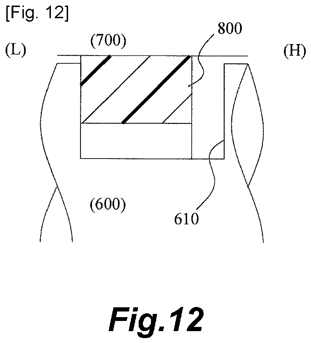

In an Automatic Transmission (AT) or a Continuously Variable Transmission (CVT) for an automobile, a seal ring for sealing an annular gap between a shaft and a housing that rotate relative to each other is provided in order to hold oil pressure. Referring to Figs. 11 and 12, a seal ring according to a conventional example will be described. Fig. 11 is a schematic sectional view showing a seal ring according to a conventional example in a condition where oil pressure is not held thereby, and Fig. 12 is a schematic sectional view showing the seal ring according to the conventional example in a condition where oil pressure is held thereby. A seal ring 800 according to this conventional example is mounted in an annular groove 610 formed in an outer periphery of a shaft 600 so as to contact an inner peripheral surface of a shaft hole provided in a housing 700, the shaft 600 being inserted into the shaft hole, and respective side wall surfaces of the annular groove 610 slidably, and thus the seal ring 800 seals an annular gap between the shaft 600 and the shaft hole in the housing 700.

With the seal ring 800 used in the application described above, it is necessary to ensure that sliding torque is sufficiently low. For this purpose, the seal ring 800 is formed without interference by making a circumferential length of an outer peripheral surface of the seal ring 800 shorter than a circumferential length of the inner peripheral surface of the shaft hole in the housing 700. Accordingly, in a condition where an engine of the automobile is started such that the oil pressure is high, the seal ring 800 is increased in diameter by the oil pressure so as to contact the inner peripheral surface of the shaft hole and the side wall surfaces of the annular groove 610 closely, thereby exhibiting a sufficient oil pressure holding function (see Fig. 12). When, on the other hand, the engine is stopped so that no oil pressure is exerted on the seal ring 800, the seal ring 800 is separated from the inner peripheral surface of the shaft hole and the side wall surfaces of the annular groove 610 (see Fig. 11).

Here, an abutment joint is typically provided in a single circumferential direction location of the seal ring 800 to facilitate mounting of the seal ring 800 in the annular groove 610. A special step cut with which a stable sealing performance is exhibited even following thermal expansion and contraction is known as a structure of the abutment joint (see PTL 1 and 2). Even with a special step cut, however, leakage of a sealing subject liquid cannot be prevented reliably, and therefore demand exists for a further improvement in sealing performance.

Moreover, the seal ring 800 configured as described above does not exhibit a sealing function when no oil pressure is exerted thereon. Hence, in a configuration where shift control is executed using oil pumped by a hydraulic pump, such as an AT or a CVT, oil that was sealed in by the seal ring 800 is no longer sealed in when a no-load condition (an idling stop, for example), in which the hydraulic pump is stopped, is established, and as a result, the oil returns to an oil pan such that oil no longer exists in the vicinity of the seal ring 800. Accordingly, when the engine is started (restarted) from this condition, no oil exists in the vicinity of the seal ring 800, and therefore an operation is started in an unlubricated condition. As a result, reductions in responsiveness and operability occur.

PTL 4 discloses a seal ring having the features of the preamble of independent claim 1. Further prior art is discussed in PTL 5.

### [Citation List]

### [Patent Literature]

[PTL 1]
   Japanese Patent Application Publication No. 2002-372154
[PTL 2]
   Japanese Patent Application Publication No. 2008-190570
[PTL 3]
   Japanese Patent Application Publication No. 2008-111477
[PTL 4]
   WO 2010/116932 A1
[PTL 5]
   US 1 696 424 A

### [Summary of Invention]

### [Technical Problem]

An object of the present invention is to provide a seal ring that can exhibit a sealing function even when fluid pressure is low.

### [Solution to Problem]

The object is achieved by a seal ring having the features of independent claim 1. Further advantageous developments are set out in the dependent claims. The present invention employs following means to solve the problems described above.

More specifically, the present invention is a seal ring that is mounted in an annular groove provided in an outer periphery of a shaft in order to seal an annular gap between the shaft and a housing that rotate relative to each other, thereby holding fluid pressure in a sealing subject region formed such that the fluid pressure therein varies, the seal ring including:
a resin seal ring main body in which an abutment joint is provided in one location in a circumferential direction; and
an elastic body that presses an end portion on a first side of a mating surface of the abutment joint and an end portion on a second side of the mating surface of the abutment joint in directions for forcing the respective end portions away from each other in the circumferential direction.

According to the present invention, the elastic body presses the end portion on the first side of the mating surface of the abutment joint and the end portion on the second side of the mating surface of the abutment joint in directions for forcing the respective end portions away from each other in the circumferential direction. Accordingly, a force for deforming the seal ring main body in a direction for increasing a diameter thereof acts thereon. Hence, the seal ring can be kept in contact with an inner peripheral surface of a shaft hole in the housing even when no fluid pressure acts thereon (no differential pressure is generated) or substantially no fluid pressure acts thereon (substantially no differential pressure is generated). As a result, a sealing function is exhibited such that the fluid pressure in the sealing subject region can be held immediately after the fluid pressure starts to increase.

Preferably, a circumferential length of an outer peripheral surface of the seal ring main body alone is set to be shorter than a circumferential length of an inner peripheral surface of a shaft hole in the housing, while a circumferential length of an outer peripheral surface of the entire seal ring, including the seal ring main body, the first elastic body sealing portion, and the second elastic body sealing portion, is set to be longer than the circumferential length of the inner peripheral surface of the shaft hole in the housing.

As a result, sliding torque between the outer peripheral surface of the seal ring and the inner peripheral surface of the shaft hole in the housing can be suppressed, and at the same time, the seal ring can be kept in contact with the inner peripheral surface of the shaft hole in the housing even when no fluid pressure acts thereon (i.e. when no differential pressure is generated).

A metal spring (a coil spring or a plate spring, for example) may also be used favorably as the elastic body.

Note that the respective configurations described above may be employed in all possible combinations.

### [Advantageous Effects of Invention]

As described above, according to the present invention, a sealing function can be exhibited even when fluid pressure is low.

### [Brief Description of Drawings]

[Fig. 1]

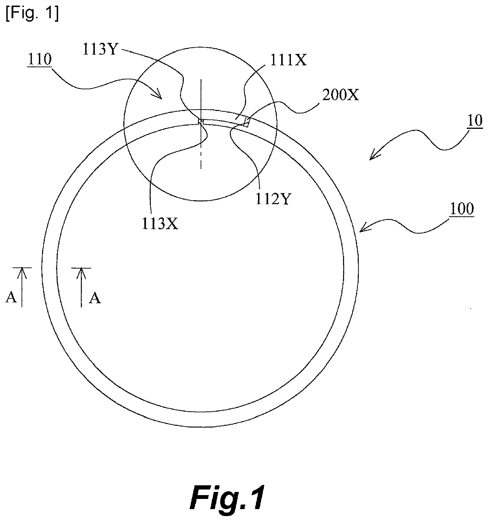

   Fig. 1 is a side view of a seal ring according to a first embodiment constituting a not claimed comparative example of the present invention.
[Fig. 2]

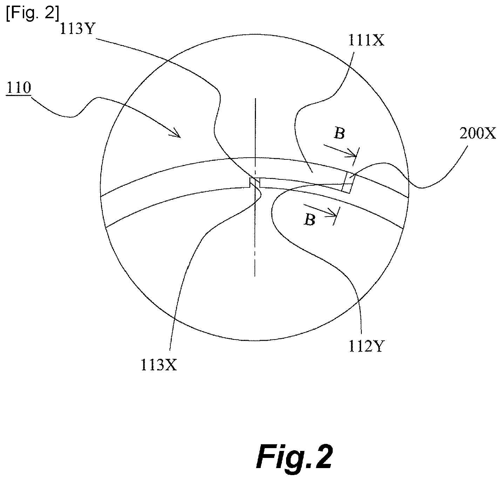

   Fig. 2 is a partially enlarged view of a side view of the seal ring according to the first embodiment.
[Fig. 3]

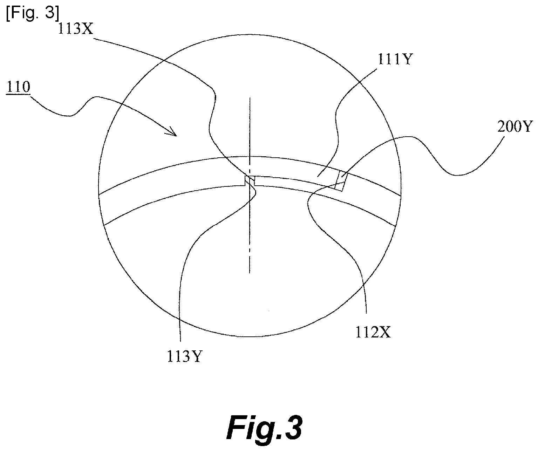

   Fig. 3 is a partially enlarged view of a side view of the seal ring according to the first embodiment.
[Fig. 4]

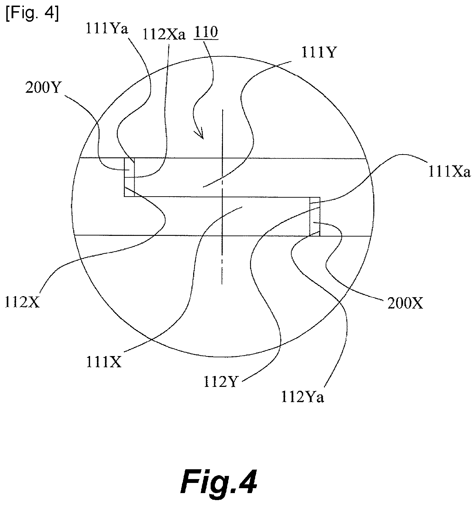

   Fig. 4 is a partially enlarged view of a view showing the seal ring according to the first embodiment from an outer peripheral surface side.
[Fig. 5]

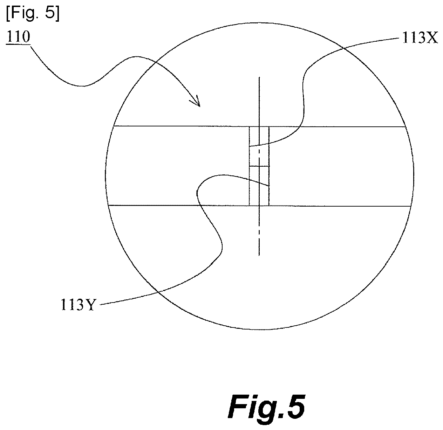

   Fig. 5 is a partially enlarged view of a view showing the seal ring according to the first embodiment from an inner peripheral surface side.
[Fig. 6]

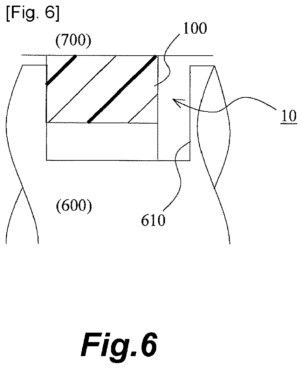

   Fig. 6 is a schematic sectional view showing the seal ring according to the first embodiment during use.
[Fig. 7]

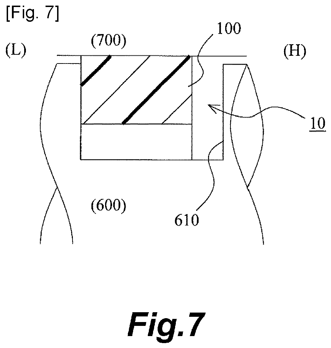

   Fig. 7 is a schematic sectional view showing the seal ring according to the first embodiment during use.
[Fig. 8]

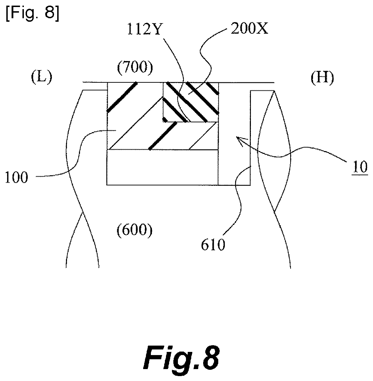

   Fig. 8 is a schematic sectional view showing the seal ring according to the first embodiment during use.
[Fig. 9]

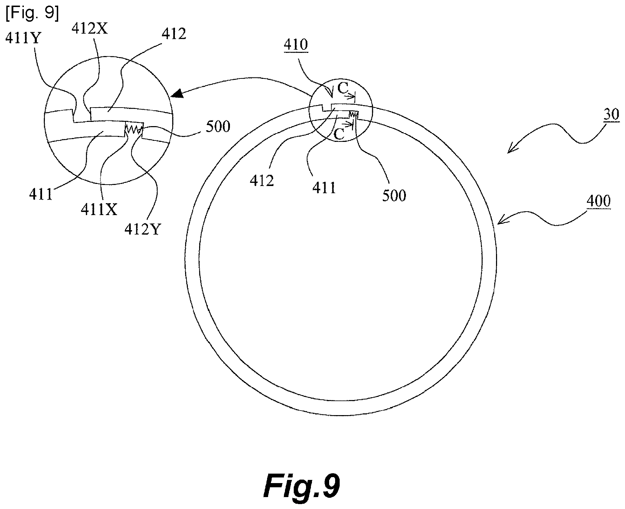

   Fig. 9 is a side view of a seal ring according to a second embodiment constituting an embodiment of the present invention.
[Fig. 10]

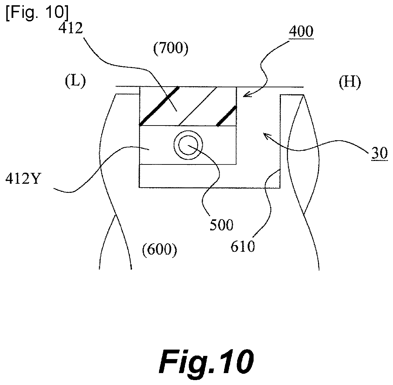

   Fig. 10 is a schematic sectional view showing the seal ring according to the second embodiment of the present invention during use.
[Fig. 11]
   Fig. 11 is a schematic sectional view showing a seal ring according to a conventional example during use.
[Fig. 12]
   Fig. 12 is a schematic sectional view showing the seal ring according to the conventional example during use.

### [Description of Embodiments]

Exemplary embodiments of the present invention and not claimed comparative examples useful for understanding the invention will be described in detail below with reference to the drawings. Note, however, that unless specified otherwise, the scope of the invention is not limited to the dimensions, materials, shapes, relative positions, and so on of constituent components described in the embodiments. The seal ring according to the embodiments is used in an automobile transmission such as an AT or a CVT in order to seal an annular gap between a shaft and a housing that rotate relative to each other so as to hold oil pressure. Further, in the following description, a "high pressure side" refers to a side having a high pressure when differential pressure is generated between respective sides of the seal ring, while a "low pressure side" refers to a side having a low pressure when differential pressure is generated between the respective sides of the seal ring.

### (First Embodiment)

Referring to Figs. 1 to 8, a seal ring according to a first embodiment constituting a not claimed comparative example useful for understanding the invention will be described. Fig. 1 is a side view (a schematic side view) of the seal ring according to the first embodiment. Fig. 2 is a partially enlarged view of a side view of the seal ring according to the first embodiment, and shows an enlargement of a part surrounded by a circle in Fig. 1. Fig. 3 is a partially enlarged view of a side view of the seal ring according to the first embodiment, and shows an enlargement of the part surrounded by a circle in Fig. 1 from an opposite side. Fig. 4 is a partially enlarged view of a view showing the seal ring according to the first embodiment from an outer peripheral surface side, and shows an enlargement of the part surrounded by a circle in Fig. 1 from the outer peripheral surface side. Fig. 5 is a partially enlarged view of a view showing the seal ring according to the first embodiment from an inner peripheral surface side, and shows an enlargement of the part surrounded by a circle in Fig. 1 from the inner peripheral surface side. Figs. 6 to 8 are schematic sectional views showing a sealing structure according to the first embodiment (i.e. showing the seal ring during use). Note that Fig. 6 shows a no-load condition, while Figs. 7 and 8 show conditions in which differential pressure is generated. Further, the seal ring in Figs. 6 and 7 corresponds to an AA sectional view of Fig. 1, while the seal ring in Fig. 8 corresponds to a BB sectional view of Fig. 2.

### <Sealing structure and seal ring configuration>

Referring specifically to Fig. 1 and Figs. 6 to 8, a sealing structure and a seal ring configuration according to the first embodiment will be described. The sealing structure according to this embodiment is constituted by a shaft 600 and a housing 700 that rotate relative to each other, and a seal ring 10 that seals an annular gap between the shaft 600 and the housing 700 (an inner peripheral surface of a shaft hole of the housing 700, the shaft 600 being inserted into the shaft hole). The seal ring 10 according to this embodiment is mounted in an annular groove 610 provided in an outer periphery of the shaft 600 in order to seal the annular gap between the shaft 600 and the housing 700 that rotate relative to each other. Thus, the seal ring 10 holds fluid pressure (in this embodiment, oil pressure) in a sealing subject region formed such that the fluid pressure therein varies. In this embodiment, fluid pressure in a right side region of Figs. 6 to 8 varies, and therefore the seal ring 10 serves to hold fluid pressure in a sealing subject region on the right side of the figures. Note that when an engine of the automobile is stopped such that a no-load condition is established, the fluid pressure in the sealing subject region is low, and when the engine is started, the fluid pressure in the sealing subject region increases.

The seal ring 10 according to this embodiment is constituted by a seal ring main body 100 formed from a resin such as polyether ether ketone (PEEK), polyphenylene sulfide (PPS), or polytetrafluoroethylene (PTFE), and first and second elastic body sealing portions 200X, 200Y formed from rubber elastic bodies made of acrylic rubber (ACM), fluorine rubber (FKM), hydrogenated nitrile rubber (HNBR), or the like.

Further, a circumferential length of an outer peripheral surface of the seal ring main body 100 alone is set to be shorter than a circumferential length of an inner peripheral surface of the shaft hole in the housing 700, while a circumferential length of an outer peripheral surface of the entire seal ring 10, including the seal ring main body 100 and the first and second elastic body sealing portions 200X, 200Y, is set to be longer than the circumferential length of the inner peripheral surface of the shaft hole in the housing 700.

### <Seal ring main body>

Referring specifically to Figs. 1 to 5, the seal ring main body 100 according to this embodiment will be described in further detail. An abutment joint 110 is provided in a single circumferential direction location of the seal ring main body 100. In the seal ring main body 100 according to this embodiment, the abutment joint 110 is formed with respect to an annular member having a rectangular cross-section. However, this shape is merely an example, and this does not mean that processing for forming the abutment joint 110 is invariably implemented using an annular member having a rectangular cross-section as a base material. Needless to mention, an annular member having a rectangular cross-section may be molded in advance, whereupon the abutment joint 110 is obtained by being cut therefrom. Alternatively, depending on the resin material, a component including the abutment joint 110 may be molded. Hence, there are no particular limitations on the method of manufacturing the abutment joint 110.

The abutment joint 110 employs a so-called special step cut provided with a mating surface (a cut surface) that takes the shape of a step when seen from the outer peripheral surface side and wall surface sides on respective sides thereof. Hence, in the seal ring main body 100, a first fitting projection 111X and a first fitting recess 112X are provided on the outer peripheral side on a first side of the mating surface, while a second fitting recess 112Y, to which the first fitting projection 111X is fitted, and a second fitting projection 111Y, which is fitted to the first fitting recess 112X, are provided on the outer peripheral side on a second side of the mating surface. Note that an end surface 113X on an inner peripheral surface side on the first side of the mating surface and an end surface 113Y on the inner peripheral surface side on the second side of the mating surface oppose each other. The special step cut is well-known technology, and therefore detailed description thereof has been omitted. Note, however, that the special step cut has a characteristic of maintaining a stable sealing performance even when the circumferential length of the seal ring main body 100 varies due to thermal expansion and contraction. Also note that the "mating surface (the cut surface)" may be obtained by molding as well as cutting.

### <First elastic body sealing portion and second elastic body sealing portion>

Referring specifically to Figs. 1 to 4, the first elastic body sealing portion 200X and the second elastic body sealing portion 200Y will be described in further detail.

The first elastic body sealing portion 200X is provided between a first front end surface 111Xa on a circumferential direction front end of the first fitting projection 111X and a first opposing surface 112Ya by which the second fitting recess 112Y opposes the first front end surface 111Xa. The first elastic body sealing portion 200X serves to seal a gap between the first front end surface 111Xa and the first opposing surface 112Ya, and to press the first front end surface 111Xa and the first opposing surface 112Ya in directions for forcing the first front end surface 111Xa and the first opposing surface 112Ya away from each other in the circumferential direction. Further, the first elastic body sealing portion 200X is fixed by adhesion or the like to one of the first front end surface 111Xa and the first opposing surface 112Ya, but not fixed to the other.

The second elastic body sealing portion 200Y is provided between a second front end surface 111Ya on a circumferential direction front end of the second fitting projection 111Y and a second opposing surface 112Xa by which the first fitting recess 112X opposes the second front end surface 111Ya. The second elastic body sealing portion 200Y serves to seal a gap between the second front end surface 111Ya and the second opposing surface 112Xa, and to press the second front end surface 111Ya and the second opposing surface 112Xa in directions for forcing the second front end surface 111Ya and the second opposing surface 112Xa away from each other in the circumferential direction. Further, the second elastic body sealing portion 200Y is fixed by adhesion or the like to one of the second front end surface 111Ya and the second opposing surface 112Xa, but not fixed to the other.

The first and second elastic body sealing portions 200X, 200Y configured as described above each press one end portion and another end portion on respective sides of the mating surface of the abutment joint 110 of the seal ring main body 100 in directions for forcing the respective end portions away from each other in the circumferential direction. As a result, a force for deforming the seal ring main body 100 in a direction for increasing the diameter thereof acts thereon.

Note that in the seal ring 10 according to this embodiment, respective circumferential direction lengths of the first fitting projection 111X, the second fitting projection 111Y, the first fitting recess 112X, and the second fitting recess 112Y are all set to be identical. Moreover, respective circumferential direction lengths of the first elastic body sealing portion 200X and the second elastic body sealing portion 200Y are set to be identical to each other and longer than the circumferential direction length of the first fitting projection 111X. In so doing, a gap is secured between the inner peripheral surface side end surface 113X on the first side of the mating surface of the abutment joint 110 and the inner peripheral surface side end surface 113Y on the second side of the mating surface of the abutment joint 110, regardless of thermal expansion and contraction by the seal ring main body 100.

### <Mechanism during use of seal ring>

Referring specifically to Figs. 6 to 8, a mechanism employing during use of the seal ring 10 according to this embodiment will be described. Fig. 6 shows a no-load condition in which the engine is stopped such that no differential pressure (or substantially no differential pressure) exists between left and right regions on either side of the seal ring 10. Note that the seal ring main body 100 in Fig. 6 corresponds to an AA cross-section of Fig. 1. Figs. 7 and 8 show a condition in which the engine is started such that the fluid pressure in the region on the right side of the seal ring 10 is higher than the fluid pressure in the region on the left side. Note that the seal ring main body 100 in Fig. 7 corresponds to the AA cross-section of Fig. 1, while the seal ring main body 100 in Fig. 8 corresponds to a BB cross-section of Fig. 2.

In the seal ring 10 according to this embodiment, as described above, the circumferential length of the outer peripheral surface of the seal ring main body 100 alone is set to be shorter than the circumferential length of the inner peripheral surface of the shaft hole in the housing 700. However, the circumferential length of the outer peripheral surface of the entire seal ring 10 is set to be longer than the circumferential length of the inner peripheral surface of the shaft hole in the housing 700. Further, a force for deforming the seal ring main body 100 in a direction for increasing the diameter thereof is exerted thereon by the first elastic body sealing portion 200X and the second elastic body sealing portion 200Y. Hence, in a no-load condition, even though no differential pressure exists between the left and right regions, the outer peripheral surface of the seal ring 10 remains in contact with the inner peripheral surface of the shaft hole in the housing 700 (see Fig. 6).

When the engine is started such that differential pressure is generated, the seal ring 10 is brought into close contact with the side wall surface of the annular groove 610 on the low pressure side (L) by fluid pressure from the high pressure side (H). Needless to mention, the seal ring 10 remains in contact with (slides along) the inner peripheral surface of the shaft hole in the housing 700. As a result, an annular gap between the shaft 600 and the housing 700 is sealed. Further, when the engine is subsequently stopped such that the no-load condition is established, a force for deforming the seal ring main body 100 in a direction for increasing the diameter thereof acts thereon. Accordingly, the outer peripheral surface of the seal ring 10 closely contacts the inner peripheral surface of the shaft hole in the housing 700 such that the seal ring 10 substantially does not move in an axial direction (a central axis direction of the shaft 600). In other words, the seal ring 10 remains in close contact with the side wall surface of the annular groove 610 on the low pressure side (L). As a result, the annular gap between the shaft 600 and the housing 700 remains sealed even in the no-load condition.

### <Advantages of seal ring according to this embodiment>

With the seal ring 10 according to this embodiment, the abutment joint 110 is provided on the seal ring main body 100, but gaps in the abutment joint 110 are sealed by the first elastic body sealing portion 200X and the second elastic body sealing portion 200Y. As a result, leakage of a sealing subject fluid through the gaps in the abutment joint 110 of the seal ring main body 100 is suppressed. With the seal ring 10 according to this embodiment, therefore, the sealing performance can be improved even when the abutment joint 110 is provided.

Further, according to this embodiment, the first elastic body sealing portion 200X and the second elastic body sealing portion 200Y each press one end portion and another end portion on respective sides of the mating surface of the abutment joint 110 of the seal ring main body 100 in directions for forcing the respective end portions away from each other in the circumferential direction. Accordingly, a force for deforming the seal ring main body 100 in a direction for increasing the diameter thereof acts thereon. Hence, the seal ring 10 can be kept in contact with the inner peripheral surface of the shaft hole in the housing 700 even when no fluid pressure acts thereon (no differential pressure is generated) or substantially no fluid pressure acts thereon (substantially no differential pressure is generated). As a result, a sealing function is exhibited such that the fluid pressure in the sealing subject region can be held immediately after the fluid pressure starts to increase.

More specifically, in an engine having an idling stop function, when the engine is started by depressing the accelerator from a condition in which the engine is stopped, the oil pressure on the sealing subject region side can be held immediately after the oil pressure starts to increase. Here, a resin seal ring does not typically exhibit a function for suppressing fluid leakage to a large extent. With the seal ring 10 according to this embodiment, however, the annular gap between the shaft 600 and the housing 700 remains sealed even in the no-load condition, and therefore a function for suppressing fluid leakage is exhibited to a sufficient extent. Hence, a condition in which differential pressure exists can be maintained for a while even after the engine is stopped such that an action of a pump or the like is halted. In an engine having an idling stop function, therefore, a condition in which differential pressure exists can be maintained in a case where the engine is stopped for a relatively short time, and as a result, fluid pressure can be held favorably immediately after the engine is restarted.

Furthermore, in the seal ring 10 according to this embodiment, the first elastic body sealing portion 200X is fixed to one of the first front end surface 111Xa and the first opposing surface 112Ya, and the second elastic body sealing portion 200Y is fixed to one of the second front end surface 111Ya and the second opposing surface 112Xa. Hence, a gap can be formed between one end portion and another end portion on either side of the mating surface of the abutment joint 110, and as a result, an operation for mounting the seal ring 10 in the annular groove 610 can be executed easily.

Moreover, in the seal ring 10 according to this embodiment, the circumferential length of the outer peripheral surface of the seal ring main body 100 alone is set to be shorter than the circumferential length of the inner peripheral surface of the shaft hole in the housing 700, while the circumferential length of the outer peripheral surface of the entire seal ring 10, including the seal ring main body 100, the first elastic body sealing portion 200X, and the second elastic body sealing portion 200Y, is set to be longer than the circumferential length of the inner peripheral surface of the shaft hole in the housing 700. As a result, sliding torque between the outer peripheral surface of the seal ring 10 and the inner peripheral surface of the shaft hole in the housing 700 can be suppressed, and at the same time, the seal ring 10 can be kept in contact with the inner peripheral surface of the shaft hole in the housing 700 even when no fluid pressure acts thereon (i.e. when no differential pressure is generated).

Note that the seal ring 10 according to this embodiment is shaped to be symmetrical about a central plane in the axial direction. Hence, when the seal ring 10 is mounted in the annular groove 610, there is no need to consider a mounting direction, and therefore the seal ring 10 can be mounted easily. Moreover, the seal ring 10 can also be used in an environment where the high pressure side and the low pressure side are switched.

### (Second Embodiment)

Referring to Figs. 9 and 10, a seal ring according to a second embodiment constituting an embodiment of the present invention will be described. Fig. 9 is a side view of the seal ring according to the second embodiment of the present invention. Note that a partially enlarged view is shown in the upper left of Fig. 9. Fig. 10 is a schematic sectional view showing the seal ring according to the second embodiment of the present invention during use. Note that the seal ring in Fig. 10 corresponds to a CC sectional view of Fig. 9.

### <Sealing structure>

Similarly to the first embodiment, the sealing structure according to this embodiment is constituted by the shaft 600 and the housing 700 that rotate relative to each other, and a seal ring 30 that seals the annular gap between the shaft 600 and the housing 700 (the inner peripheral surface of the shaft hole in the housing 700, the shaft 600 being inserted into the shaft hole). The seal ring 30 according to this embodiment is mounted in the annular groove 610 provided in the outer periphery of the shaft 600 so as to seal the annular gap between the shaft 600 and the housing 700 that rotate relative to each other. As a result, the seal ring 30 holds fluid pressure (in this embodiment, oil pressure) in the sealing subject region formed such that the fluid pressure therein varies. In this embodiment, fluid pressure in a right side region of Fig. 10 varies, and therefore the seal ring 30 serves to hold fluid pressure in a sealing subject region on the right side of Fig. 10. Note that when the engine of the automobile is stopped such that a no-load condition is established, the fluid pressure in the sealing subject region is low, and when the engine is started, the fluid pressure in the sealing subject region increases.

The seal ring 30 according to this embodiment is constituted by a seal ring main body 400 formed from a resin such as polyether ether ketone (PEEK), polyphenylene sulfide (PPS), or polytetrafluoroethylene (PTFE), and a metal spring 500 serving as a metal elastic body. As shown in the figures, a coil spring is employed as the metal spring 500 according to this embodiment, but a plate spring or the like may be employed instead.

Further, a circumferential length of an outer peripheral surface of the seal ring main body 400 alone is set to be shorter than the circumferential length of the inner peripheral surface of the shaft hole in the housing 700, while a circumferential length of an outer peripheral surface of the entire seal ring 30, including the seal ring main body 400 and the metal spring 500, is set to be longer than the circumferential length of the inner peripheral surface of the shaft hole in the housing 700.

### <Seal ring main body>

An abutment joint 410 is provided in a single circumferential direction location of the seal ring main body 400. In the seal ring main body 400 according to this embodiment, the abutment joint 410 is formed with respect to an annular member having a rectangular cross-section. However, this shape is merely an example, and this does not mean that processing for forming the abutment joint 410 is invariably implemented using an annular member having a rectangular cross-section as a base material. Needless to mention, an annular member having a rectangular cross-section may be molded in advance, whereupon the abutment joint 410 is obtained by being cut therefrom. Alternatively, depending on the resin material, a component including the abutment joint 410 may be molded. Hence, there are no particular limitations on the method of manufacturing the abutment joint 410.

The abutment joint 410 employs a so-called step cut provided with a mating surface (a cut surface) that takes the shape of a step when seem from wall surface sides on respective sides thereof. Hence, in the seal ring main body 400, a first fitting projection 411 is provided on the inner peripheral side on a first side of the mating surface, and a second fitting projection 412 is provided on the outer peripheral side on a second side of the mating surface. Note that the "mating surface (the cut surface)" may be obtained by molding as well as cutting.

### <Metal spring (elastic body)>

The metal spring 500 is fitted between a first front end surface 411X on a circumferential direction front end of the first fitting projection 411, which is provided on the inner peripheral side on the first side of the mating surface, and an end surface 412Y on an inner peripheral side on the second side of the mating surface. The metal spring 500 serves to press the first front end surface 411X and the end surface 412Y in directions for forcing the first front end surface 411X and the end surface 412Y away from each other in the circumferential direction.

The metal spring 500 configured as described above presses one end portion and another end portion on respective sides of the mating surface of the abutment joint 410 of the seal ring main body 400 in directions for forcing the respective end portions away from each other in the circumferential direction. As a result, a force for deforming the seal ring main body 400 in a direction for increasing the diameter thereof acts thereon.

Note that a configuration in which the metal spring 500 is fitted between a second front end surface 412X on a circumferential direction front end of a second fitting projection 412, which is provided on the outer peripheral side on the second side of the mating surface, and an end surface 411Y on the outer peripheral side on the first side of the mating surface may also be employed. Likewise in this case, the metal spring 500 serves to press the second front end surface 412X and the end surface 411Y in directions for forcing the second front end surface 412X and the end surface 411Y away from each other in the circumferential direction. A configuration in which the metal spring 500 is fitted both between the first front end surface 411X and the end surface 412Y and between the second front end surface 412X and the end surface 411Y may also be employed.

Further, in the seal ring 30 according to this embodiment, respective circumferential direction lengths of the first fitting projection 411 and the second fitting projection 412 are set to be identical. In so doing, a gap is secured between the second front end surface 412X and the end surface 411Y in a case where the metal spring 500 is fitted only between the first front end surface 411X and the end surface 412Y, regardless of thermal expansion and contraction by the seal ring main body 400. Moreover, a gap is secured between the first front end surface 411X and the end surface 412Y in a case where the metal spring 500 is fitted only between the second front end surface 412X and the end surface 411Y, regardless of thermal expansion and contraction by the seal ring main body 400.

The mechanism employed during use of the seal ring 30 is similar to that of the first embodiment, and therefore description thereof has been omitted.

In contrast to the first embodiment, the seal ring 30 according to this embodiment is not capable of suppressing leakage of the sealing subject fluid from the abutment joint 410. Similarly to the first embodiment, however, in the seal ring 30 according to this embodiment, the metal spring 500 presses one end portion and another end portion on either side of the mating surface of the abutment joint 410 of the seal ring main body 400 in directions for forcing the respective end portions away from each other in the circumferential direction, and as a result, a force for deforming the seal ring main body 400 in a direction for increasing the diameter thereof acts thereon. Hence, the seal ring 30 can be kept in contact with the inner peripheral surface of the shaft hole in the housing 700 even when no fluid pressure acts thereon (no differential pressure is generated) or substantially no fluid pressure acts thereon (substantially no differential pressure is generated). As a result, a sealing function is exhibited such that the fluid pressure in the sealing subject region can be held immediately after the fluid pressure starts to increase.

Further, in the seal ring 30 according to this embodiment, the metal spring 500 is fitted into the abutment joint 410 of the seal ring main body 400. Hence, a gap can be formed in the seal ring main body 400 between one end portion and another end portion on either side of the mating surface of the abutment joint 410, and as a result, an operation for mounting the seal ring 30 in the annular groove 610 can be executed easily.

Moreover, likewise in the seal ring 30 according to this embodiment, the circumferential length of the outer peripheral surface of the seal ring main body 400 alone is set to be shorter than the circumferential length of the inner peripheral surface of the shaft hole in the housing 700, while the circumferential length of the outer peripheral surface of the entire seal ring 30, including the seal ring main body 400 and the metal spring 500, is set to be longer than the circumferential length of the inner peripheral surface of the shaft hole in the housing 700. As a result, sliding torque between the outer peripheral surface of the seal ring 30 and the inner peripheral surface of the shaft hole in the housing 700 can be suppressed, and at the same time, the seal ring 30 can be kept in contact with the inner peripheral surface of the shaft hole in the housing 700 even when no fluid pressure acts thereon (i.e. when no differential pressure is generated).

Note that the seal ring 30 according to this embodiment is likewise shaped to be symmetrical about a central plane in the axial direction. Hence, when the seal ring 30 is mounted in the annular groove 610, there is no need to consider the mounting direction, and therefore the seal ring 30 can be mounted easily. Moreover, the seal ring 30 can be used in an environment where the high pressure side and the low pressure side are switched.

In the first embodiment, a case in which seal portions (the first elastic body sealing portion 200X and the second elastic body sealing portion 200Y) formed from rubber elastic bodies are used as an elastic body was described. Further, in the second embodiment, a case in which a metal spring (a coil spring or a plate spring) is used as the elastic body was described. However, various materials may be applied as appropriate as the elastic body according to the present invention. Moreover, various shapes other than the shapes described in the above embodiments may be applied as the shape of the elastic body.

### [Reference Signs List]

- 10, 30: Seal ring
- 100, 400: Seal ring main body
- 110, 410: Abutment joint
- 111X: First fitting projection
- 111Xa: First front end surface
- 111Y: Second fitting projection
- 111Ya: Second front end surface
- 112X: First fitting recess
- 112Xa: Second opposing surface
- 112Y: Second fitting recess
- 112Ya: First opposing surface
- 113X: End surface
- 113Y: End surface
- 200X: First elastic body sealing portion
- 200Y: Second elastic body sealing portion
- 411: First fitting projection
- 411X: First front end surface
- 411Y: End surface
- 412: Second fitting projection
- 412X: Second front end surface
- 412Y: End surface
- 500: Metal spring
- 600: Shaft
- 610: Annular groove
- 700: Housing

## Claims

1. A seal ring (30) that is configured to be mounted in an annular groove (610) provided in an outer periphery of a shaft (600) in order to seal an annular gap between the shaft (600) and a housing (700) that rotate relative to each other, thereby holding fluid pressure in a sealing subject region formed such that the fluid pressure therein varies, the seal ring (30) comprising:
a resin seal ring main body (400) in which an abutment joint (410) is provided in one location in a circumferential direction; wherein
the abutment joint (410) is provided with a mating surface that takes the shape of a step when seen from wall surface sides on respective sides thereof, whereby a first fitting projection (411) is provided on the inner peripheral side on a first side of the mating surface, and a second fitting projection (412) is provided on the outer peripheral side on a second side of the mating surface,
the seal ring (30) is **characterized by**
an elastic body (500) that is configured to press an end portion on a first side of a mating surface of the abutment joint (410) and an end portion on a second side of the mating surface of the abutment joint (410) in directions for forcing the respective end portions away from each other in the circumferential direction, wherein
said elastic body (500) is provided between a first front end surface (411X) on a circumferential direction front end of the first fitting projection (411) and an end surface (412Y) on the inner peripheral side on the second side of the mating surface, and said elastic body (500) presses the first front end surface (411X) and the end surface (412Y) in directions for forcing the first front end surface (411X) and the end surface (412Y) away from each other in the circumferential direction.

2. The seal ring (30) according to claim 1, wherein a circumferential length of an outer peripheral surface of the seal ring main body (400) alone is set to be shorter in use than a circumferential length of an inner peripheral surface of a shaft hole in the housing (700), while a circumferential length of an outer peripheral surface of the entire seal ring (30), including the seal ring main body (400) and the elastic body (500) is set to be longer in use than the circumferential length of the inner peripheral surface of the shaft hole in the housing (700).

3. The seal ring (30) according to claim 1, wherein the elastic body (500) is a metal spring.

4. The seal ring (30) according to claim 1, wherein a gap is secured between a second front end surface (412X) on a circumferential direction front end of the second fitting projection (412) and an end surface (411Y) on the outer peripheral side on the first side of the mating surface regardless of thermal expansion and contraction by the seal ring main body.

## Patentansprüche

1. Dichtungsring (30), der eingerichtet ist, um in einer in einem Außenumfang einer Welle (600) vorgesehenen ringförmigen Nut (610) montiert zu werden, um einen ringförmigen Spalt zwischen der Welle (6) und einem Gehäuse (7) abzudichten, die relativ zueinander drehen, wodurch ein Fluiddruck in einem Gebiet eines Dichtungssubjekts gehalten wird, das derart ausgebildet ist, dass der Fluiddruck in diesem variiert, wobei der Dichtungsring (30) Folgendes aufweist:
einen Dichtungsringhauptkörper (400) aus Harz, bei dem eine Stoßverbindungsstelle (410) an einer Position in einer Umfangsrichtung vorgesehen ist; wobei
die Stoßverbindungsstelle (410) mit einer Anlagefläche versehen ist, die von Wandflächenseiten an deren jeweiligen Seiten aus gesehen die Form einer Stufe einnimmt, wodurch ein erster Passvorsprung (411) an der Innenumfangsseite an einer ersten Seite der Anlagefläche vorgesehen ist, und ein zweiter Passvorsprung (412) an der Außenumfangsseite an einer zweiten Seite der Anlagefläche vorgesehen ist,
wobei der Dichtungsring (30) **gekennzeichnet ist durch**
einen elastischen Körper (500), der eingerichtet ist, um einen Endabschnitt an einer ersten Seite einer Anlagefläche der Stoßverbindungsstelle (410) und einen Endabschnitt an einer zweiten Seite der Anlagefläche der Stoßverbindungsstelle (410) in Richtungen zu drücken, um die jeweiligen Endabschnitte in der Umfangsrichtung voneinander weg zu zwängen, wobei
der elastische Körper (500) zwischen einer ersten vorderen Endfläche (411X) an einem vorderen Ende in Umfangsrichtung des ersten Passvorsprungs (411) und einer Endfläche (412Y) an der Innenumfangsseite der zweiten Seite der Anlagefläche vorgesehen ist, und der elastische Körper (500) die erste vordere Endfläche (411X) und die Endfläche (412Y) in Richtungen drückt, um die erste vordere Endfläche (411X) und die Endfläche (412Y) in der Umfangsrichtung voneinander weg zu zwängen.

2. Dichtungsring (30) gemäß Anspruch 1, wobei eine Umfangslänge einer Außenumfangsfläche des Dichtungsringhauptkörpers (400) alleine festgelegt ist, um in Verwendung kürzer als eine Umfangslänge einer Innenumfangsfläche eines Wellenlochs in dem Gehäuse (700) zu sein, während eine Umfangslänge einer Außenumfangsfläche des gesamten Dichtungsrings (30) einschließlich des Dichtungsringhauptkörpers (400) und des elastischen Körpers (500) festgelegt ist, um in Verwendung länger als die Umfangslänge der Innenumfangsfläche des Wellenlochs in dem Gehäuse (700) zu sein.

3. Dichtungsring (30) gemäß Anspruch 1, wobei der elastische Körper (500) eine Metallfeder ist.

4. Dichtungsring (30) gemäß Anspruch 1, wobei ein Spalt zwischen einer zweiten vorderen Endfläche (412X) an einem vorderen Ende in Umfangsrichtung des zweiten Passvorsprungs (412) und einer Endfläche (411Y) an der Außenumfangsseite an der ersten Seite der Anlagefläche ohne Rücksicht auf eine Wärmeausdehnung und -schrumpfung durch den Dichtungsringhauptkörper sichergestellt ist.

## Revendications

1. Bague d'étanchéité (30) qui est configurée pour être montée dans une rainure annulaire (610) prévue dans une périphérie externe d'un arbre (600) afin de réaliser l'étanchéité d'un espace annulaire entre l'arbre (600) et un boîtier (700) qui tournent l'un par rapport à l'autre, maintenant ainsi la pression de fluide dans une région soumise à l'étanchéité formée de sorte que la pression de fluide varie à l'intérieur de cette dernière, la bague d'étanchéité (30) comprenant :
un corps principal de bague d'étanchéité en résine (400) dans lequel un joint de butée (410) est prévu dans un emplacement dans une direction circonférentielle ; dans laquelle :
le joint de butée (410) est prévu avec une surface de couplage qui prend la forme d'un gradin lorsqu'elle est observée à partir des côtés d'une surface de paroi sur ses côtés respectifs, moyennant quoi une première saillie d'ajustement (411) est prévue sur le côté périphérique interne sur un premier côté de la surface de couplage, et une seconde saillie d'ajustement (412) est prévue sur le côté périphérique externe sur un second côté de la surface de couplage,
la bague d'étanchéité (30) est **caractérisée par** :
un corps élastique (500) qui est configuré pour comprimer une partie d'extrémité sur un premier côté d'une surface de couplage du joint de butée (410) et une partie d'extrémité sur un second côté de la surface de couplage du joint de butée (410) dans des directions pour forcer les parties d'extrémité respectives à distance l'une de l'autre dans la direction circonférentielle, dans laquelle :
ledit corps élastique (500) est prévu entre une première surface d'extrémité avant (411X) sur une extrémité avant dans la direction circonférentielle de la première saillie d'ajustement (411) et une surface d'extrémité (412Y) sur le côté périphérique interne sur le second côté de la surface de couplage, et ledit corps élastique (500) comprime la première surface d'extrémité avant (411X) et la surface d'extrémité (412Y) dans des directions pour forcer la première surface d'extrémité avant (411X) et la surface d'extrémité (412Y) à distance l'une de l'autre dans la direction circonférentielle.

2. Bague d'étanchéité (30) selon la revendication 1, dans laquelle une longueur circonférentielle d'une surface périphérique externe du corps principal de bague d'étanchéité (400) seul est déterminée pour être plus courte, à l'usage, qu'une longueur circonférentielle d'une surface périphérique interne d'un trou d'arbre dans le boîtier (700), alors qu'une longueur circonférentielle d'une surface périphérique externe de toute la bague d'étanchéité (30), comprenant le corps principal de bague d'étanchéité (400) et le corps élastique (500), est déterminée pour être plus longue à l'usage, que la longueur circonférentielle de la surface périphérique interne du trou d'arbre dans le boîtier (700).

3. Bague d'étanchéité (30) selon la revendication 1, dans laquelle le corps élastique (500) est un ressort métallique.

4. Bague d'étanchéité (30) selon la revendication 1, dans laquelle un espace est fixé entre une seconde surface d'extrémité avant (412X) sur une extrémité avant dans la direction circonférentielle de la seconde saillie d'ajustement (412) et une surface d'extrémité (411Y) sur le côté périphérique externe sur le premier côté de la surface de couplage indépendamment de la dilatation et de la contraction thermique par le corps principal de bague d'étanchéité.
